# EUROPEAN PATENT SPECIFICATION

(11) **EP 1 933 434 B1**
(45) Date of publication and mention of the grant of the patent: **20.10.2010**
(21) Application number: 06425836.1
(22) Date of filing: 14.12.2006
(51) Int. Cl.: H02G 3/04

(54) **Suspendend electrical ducting system with stirrups**
Kabelkanalsystem für Deckenaufhängung mit Haltebügeln
Systéme conduit électrique suspendu avec des étriers

(43) Date of publication of application: 18.06.2008
(73) Proprietor: Bticino S.p.A., 20154 Milano (IT)
(72) Inventor: Fabrizi, Fabrizio, 24100 Bergamo (IT)
(74) Representative: Perani, Aurelio

(56) References cited:
- EP-A- 1 229 624
- EP-A- 1 241 760
- EP-A1- 0 652 609
- EP-A2- 0 161 226
- EP-A2- 0 938 177
- WO-A-88/07282
- DE-C1- 3 426 064
- DE-U1- 9 317 739
- FR-A- 1 527 775
- FR-A- 2 120 440
- FR-A1- 2 858 481
- GB-A- 824 373

## Description

This invention relates to suspended electrical ducting and corresponding accessories.

Suspended electrical ducting is well known and widely used in shops, offices, supermarkets and wherever it is necessary to distribute electrical power and possibly electrical communications signals (telephone, intercom, closed circuit TV, computer connection networks, alarms) with the possibility of providing offtakes at a number of arbitrarily selected points.

Such ducting must satisfy various requirements, such as, in general, safety, ease and simplicity of installation and maintenance, lightness, low cost, aesthetic appearance and, in some cases, also leaktight insulation of the power conductors.

One of the many problems associated with ducting of this type is that of anchoring it when suspended.

In general ducting is provided with one or more channels having an inverted T cross-section (or at least an undercut) on their upper surface.

Examples of such ducting are provided by documents EP 15356 and EP1241760.

Other examples of ducting, even if not specifically intended for suspension (but rather for mounting on a wall) are provided by DE3426064, WO8807282, EP0161226 and DE9317739.

Documents FR 1 527 775 and FR 2 120 440 show examples of stirrups (or clamps) used for electrical ductings.

Further examples of ducting which are not intended for suspended installation, are provided by EP1229624 and FR2858481.

They are of interest because they show accessories which are snap on connected to the ducting and are provided with a tongue facilitating the release of the snap on connection by means of a suitable tool, such as a screwdriver.

A similar fastener, completely unrelated to ducting, is disclosed in GB824373.

Slides provided with suspension chains, rods, or cables can be inserted into a groove or grooves from the end of the ducting.

Alternatively, as a replacement for slides, provision may be made for cams orientated with their largest dimension in the direction of the grooves to be inserted into them.

When the cams are subsequently rotated through 90° these lock in the grooves.

In this case installation is easier but it is not satisfactory in terms of safety, unless angular locking members are provided, complicating construction and assembly.

Another known limitation of known ducting lies in the fact that it has a fixed configuration of electrical conductors and is difficult to adapt to specific requirements, especially once installed.

This invention overcomes these problems simply and effectively through suspended electrical ducting in which the ducting is attached to suspension devices by snap connections without the need for tools, and therefore easily.

At the same time the attachment is reversible and detachment can only be brought about intentionally.

In addition to this the ducting can be easily configured according to different requirements, even once installed, composed with the addition of auxiliary channels, capable of using standard electrical components available on the market, such as DIN modules for attachment to rails, electrical socket and switches to be enclosed in walls and the like.

In particular the ducting can be configured in such a way that all power electrical connections are leaktight.

These results are achieved through suspended electrical ducting as defined in the appended claims.

Features and advantages of the invention will be more apparent from the following description of a preferred embodiment and its variants with reference to the appended drawings, in which:
- Figure 1 is a perspective view of a preferred embodiment of the metal enclosure of the ducting,
- Figure 2 is a view in cross-section of another embodiment of the metal enclosure of the ducting,
- Figure 3 is a perspective view of a suspension stirrup for the enclosure of Figures 1 and 2,
- Figure 4 is a diagrammatical view in cross-section of the stirrup of Figure 3 and the top of the enclosure in Figure 1 showing the manner of attachment between the two,
- Figure 5 is a view in cross-section of a member supporting and guiding electrical conductors fitted in the enclosure in Figure 1,
- Figure 6 is a diagrammatical view in cross-section of the member in Figure 5 showing the manner of installation in the enclosure,
- Figure 7 is a side view of a cable support installed in the enclosure in Figure 1,
- Figure 8 is a frontal view of the support in Figure 7,
- Figure 9 is a partial view in magnified cross-section of a portion of the enclosure designed to house a pair of twisted doublets,
- Figure 10 is a partial view in magnified cross-section of the portion of the enclosure in Figure 9 to which a rail for DIN modules is attached.
- Figure 11 is a plan view of the rail in Figure 10,
- Figure 12 is a side view of the rail in Figures 10 and 11,
- Figure 13 is a front view of a cable holding claw fitted in the enclosure in Figure 2,
- Figure 14 is a side view of the claw in Figure 13,
- Figure 15 is an exploded perspective view of the structure of an electrical component for wall enclosure, modified for installation in the enclosure of Figure 1 or 2,
- Figure 16 is a view in cross-section of the enclosure in Figure 1 fitted with a cover panel below and a pair of auxiliary raceways,
- Figure 17 is an exploded perspective view of one of the auxiliary raceways of Figure 16 and the devices for attaching the auxiliary raceway to the suspension stirrups in Figure 3.
   With reference to the cross-section in Figure 1, a preferred embodiment of the ducting comprises an enclosure 1, open at the bottom, obtained by bending and possibly rolling metal sheet, with a top wall 2 and two side walls 3, 4.

The enclosure extends longitudinally for standard modular lengths, for example 1.5 and 3 metres.

Indicatively the width of the cross-section is 100 mm and the height is 60 mm.

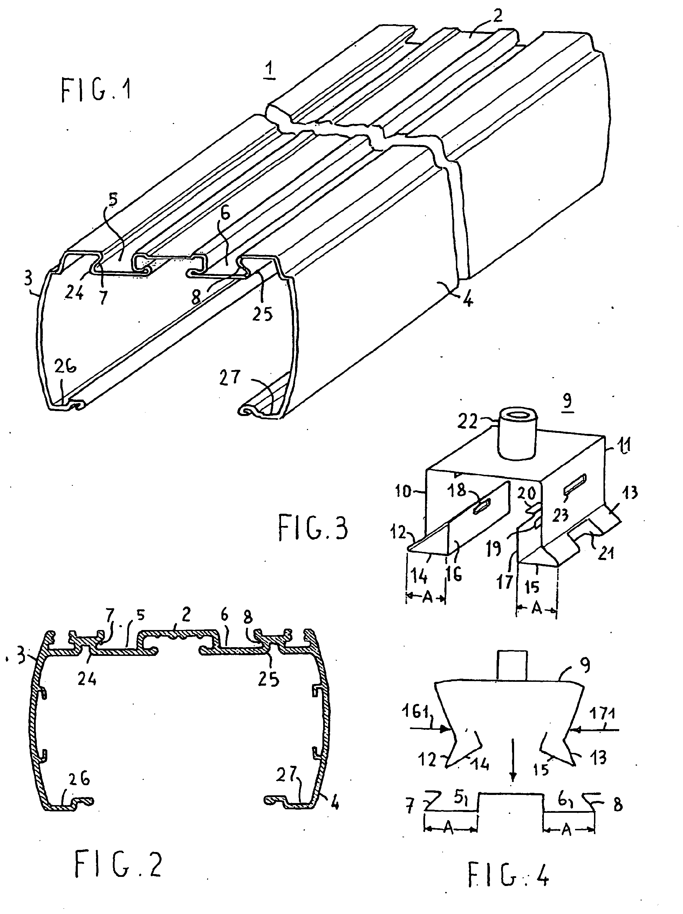

Alternatively, as illustrated in the cross-section in Figure 2, in which corresponding elements are identified by the same reference numbers, the enclosure may be obtained by extruding metal, aluminium or light alloy material.

Electrical conductors and components of various kinds, which will be considered below and which are not shown in Figures 1 and 2 for simplicity and clarity of drawing, are housed in the cavity formed by the enclosure.

Top wall 2 is shaped to form two rectilinear slots 5, 6 which are open on the outside of the enclosure.

The cross-section of the slots is substantially that of a rectangular trapezium, with a larger internal base of suitable size A (Figure 4), indicatively 15 mm, and oblique sides 7, 8 facing side walls 3, 4 in relation to the cross-section of the slots.

In order to avoid any possible equivocation it is clarified that by rectangular trapezium it is meant the geometrical figure consisting in a quadrilateral having two parallel sides and a third side perpendicular to the two parallel sides.

The larger of the two parallel sides, of size A, is the base of the trapezium.

The two slots 5, 6 form a pair of recesses into which the ends of a plurality of suspension stirrups are inserted irreversibly with a self locking snap connection.

Figure 3 shows a preferred embodiment of a suspension stirrup 9 in perspective view.

This essentially comprises a plate of spring steel bent into a saddle with two sides 10, 11 extending downwards, diverging to form engaging teeth 12, 13 respectively and then bent towards each other to form two props in line 14, 15, with length A equal to width A of the bases of the slots.

In other words each of the engaging teeth 12,13 and related prop 14,15 forms a dihedral or wedge.

Figure 4 shows diagrammatically in cross-section the operation of reversibly fitting suspension stirrups 9 into recesses 5, 6 of the enclosure.

By exerting appropriate pressure on sides 10, 11 of the stirrups and resiliently pressing them together as indicated by arrows 161, 171 it is possible to insert engaging teeth 12, 13 in the slots.

When sides 10, 11 are released, engaging teeth 12, 13 bear against the oblique sides 7, 8 of the slots and locking props 14, 15 abut against the bases of the recesses.

In a first stage of inserting props 14, 15 they may even interfere with the vertical walls of the recess and yield elastically, rotating at the ends of teeth 12, 13.

However when completely inserted they can resiliently resume their initial configuration and effectively act as props preventing the engaging teeth from sliding out of the grooves.

Attachment is therefore reversible and cannot be accidentally disengaged.

It is only through an intentional action, requiring the use of some tool, for example a common screwdriver, and the addition of a further element to the locking props that the suspension stirrups can be detached.

For this purpose, as illustrated in Figure 3, the sides of the stirrups extend beyond props 14, 15 in a pair of vertical tongues 16, 17 which are taller than the recesses so that when teeth 12, 13 are engaged in the recesses tongues 16, 17 abutting against the vertical sides of the recesses extend slightly above them.

The tongues are conveniently provided with openings 18, 19 respectively, or equivalent engaging teeth such as 20, into which or against which the end of a tool such as a common screwdriver can be inserted and thus bring about removal of the tongues from the corresponding recesses, rotating the props at the ends of teeth 12, 13 and disengaging the teeth from the recesses.

Resilient bending between teeth 12, 13 and corresponding props 14, 15 is made easier through convenient weakening voids (openings) such as 21 made therein.

In order to complete the description of attachment stirrups 9 it will be noted that these are provided with an opening into which a cable or suspension rod, or a screw for attachment via a wall plug to a ceiling can be passed.

Advantageously openings (one or more) are also made on sides 10, 11, such as for example slot 23 in Figure 3, so that auxiliary devices which will be considered below can be attached to stirrup 9.

Resuming the description of enclosure 1, with reference to Figures 1 and 2 it will be noted that within the enclosure the top wall of the enclosure forms an attachment shoulder 24, 25 at the acute angle of the trapezoidal cross-section of recesses 5, 6.

In addition to this, side walls 3, 4, which are slightly bowed for aesthetic and functional convenience (considered below), terminate at the bottom in a saddle 26, 27 folded inwards which acts as a support and attachment for an electrical conductor supporting and guide member, or for other auxiliary members, which, once seated on saddles 26, 27 snap fit with slight rotation on attachment teeth 24, 25, thus taking a stable position.

We will consider this aspect in greater detail.

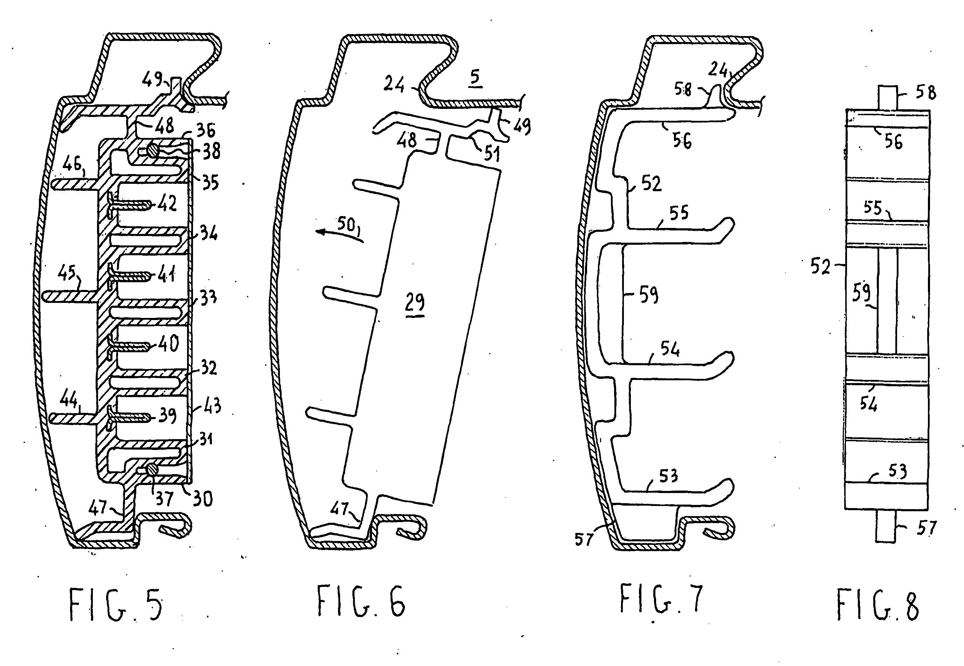

Figure 5 shows a preferred embodiment of the supporting and guide member for electrical conductors installed in the enclosure, in cross-section.

The member comprises a straight extruded body 29 (of slightly shorter length than that of the enclosure) of insulating plastics material, such as PVC and the like, of essentially rectangular cross-section, in which a plurality of straight slots are formed lying between teeth 30, 31, 32,33, 34, 35, 36.

An electrical conductor having a circular cross-section in the case of auxiliary conductors 37, 38 or having a T-shaped cross-section, obtained by bending a metal plate of copper or aluminium and coextruded with body 29 in the case of main conductors 39, 40, 41, 42, having a carrying capacity of the order of 25-40 A, is housed in each of the slots.

Conveniently but not necessarily, the slots are closed off individually by a perforatable plastics film 43, heat welded to the tops of teeth 30, ..., 36 (or also extruded on the surface of body 29 onto which the slots open), in order to ensure that the slots are leaktight along their entire length.

On the surface opposite that onto which the recesses open, body 29 has ribs 44, 45, 46 supporting one or other of side walls 3, 4 of enclosure I within it.

On one side of body 29 there is a rib 47 bent into an L-shape which is designed to be housed in saddle 26 or 27 of the enclosure and on the opposite side there is a similar rib 48 terminating in a tooth 49 designed to engage with shoulder 24 or 25 formed in the top wall of enclosure 1.

Figure 6 illustrates diagrammatically in cross-section the manner in which member 29 is inserted into the enclosure; when rib 47 is inserted into saddle 26 (or 27) member 29 may be pushed in the direction of arrow 50, against side wall 3 (or 4) of the enclosure with slight rotation in saddle 26.

Tooth 49, interfering with the top wall of the enclosure, in particular the base of recess 5 (or 6) on the inside of the enclosure, causes rib 48 and its appendage 51 to yield resiliently until member 29 adopts its final position.

At this point tooth 49 forms a snap connection against shoulder 24 (or 25) reversibly locking member 29 in the enclosure.

The insertion of a second member identical to the above into the enclosure against opposite wall 4 (Figures 1 and 2) is wholly similar.

Thus the special conformation of top wall 2 performs a dual function without the need to weigh down the enclosure with ribs intended for a single function; on the one hand a hollow having a trapezoidal cross-section is formed to ensure a permanent and reversible connection with suspension stirrups, on the other hand a stop surface which ensures stable attachment between the enclosure and the supporting members and the electrical conductor supporting and guide members such as member 29 is ensured.

It is clear than member 29 may be replaced by accessories of another type.

In a preferred embodiment, in order to satisfy the greatest variety of application requirements, provision is also made for the use of a plurality of lateral cable supports positioned at preferably regular intervals along the length of the ducting as a replacement for member 29 (or similar continuous members extending along the entire length of the enclosure).

Figures 7 and 8 show a preferred embodiment of one of the supports in side and front view respectively.

In particular in Figure 8 side cable support 52 is illustrated snap connected to side wall 3 of the enclosure.

The lateral cable support essentially comprises a rack of plastics material, such as PVC and the like, having arms 53, 54, 55, 56 which form three spaces to house insulated cables.

Lower arm 53 is provided with a rib 57 which is inserted into saddle 26.

Upper arm 56 is provided at its extremity with a tooth 58 which forms a snap connection against shoulder 25.

A vertical rib 59 makes the central part of the rack rigid.

Let us now consider another aspect of this invention; in electrical ducting intended for the transfer of electrical power and signals, in addition to ensuring adequate physical separation between power conductors and signal conductors it is also necessary for safety reasons to provide adequate screening for the signal conductors in order to prevent the transfer of noise into the signal lines.

If this were not the case it would be necessary to use screened cables having an external earth braid and the use of ordinary double telephone wires would be ruled out.

The ducting according to this invention also overcomes this problem and at the same time makes it possible to take advantage of the housings provided for signal cables, in general twisted double telephone wires, as a third recess, having a T-shaped cross-section, for the snap attachment of further accessories such as lengths of rail, of the type commonly known as DIN rail, to the enclosure in order to attach modules of the same type (magneto-thermal protective switches, differential switches and the like) and standardised boxes for containing components (switches, commutators, electrical connection sockets and the like).

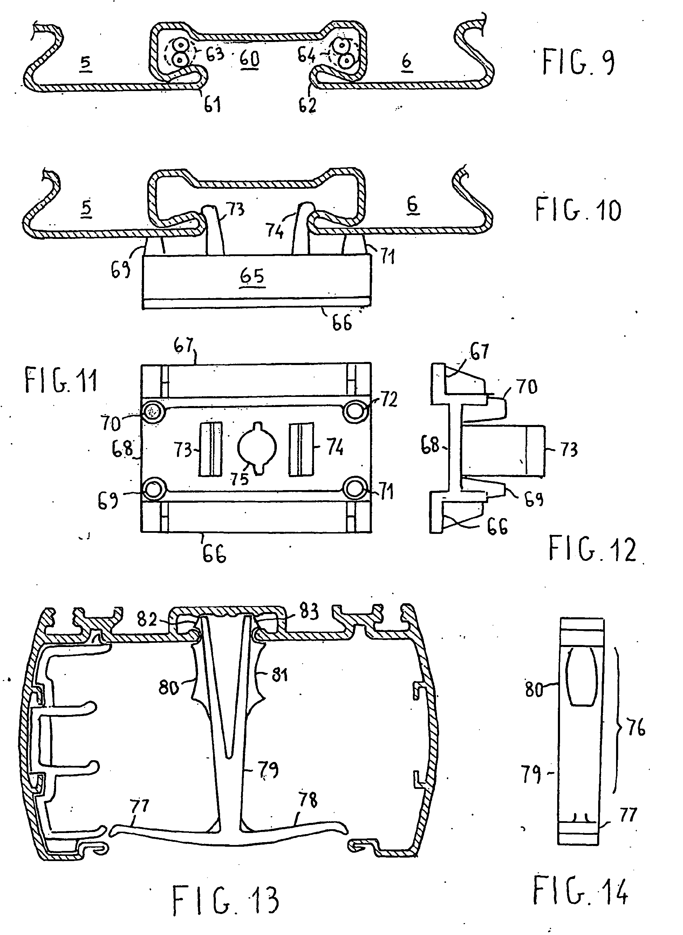

For this purpose we will reconsider Figures 1, 2 together with Figures 9 and 10 which illustrate the portion of upper wall 2 of the enclosure lying between recesses 5 and 6 in magnified cross-section.

In this area the top wall is folded to form a third recess 60, which opens towards the inside of the enclosure.

The opening is partly closed off by a pair of lips 61, 62 which form two housings on the sides of recess 60 for a pair 63, 64 of twisted doublets which are effectively screened (they are almost entirely surrounded by the metal of the enclosure, which also acts as an earth conductor), apart from being protected from accidental contacts with the power conductors.

At the same time lips 61, 62 can be used as holding members for attachment devices.

For example Figures 11 and 12 show a preferred embodiment of attachment rail 65 for DIN modules, viewed from above and the side respectively.

The rail of plastics material, which may possibly be reinforced with glass fibre, comprises two parallel tracks 66, 67 located on the sides of a platform 68 from which there extend posts 69, 70, 71, 72 and two arms 73, 74 each ending in an attachment tooth.

The attachment teeth snap fit on lips 61, 62 of recess 60.

Advantageously the platform is provided with an opening 75 through which a screw, not illustrated, can act on a wedge or expansion block which holds arms 73, 74 apart once the rail has been attached, ensuring permanent attachment.

It is clear that the expansion block may be replaced by a rotating cam.

Figure 10 shows rail 65 mounted in the enclosure, with the posts bearing against the top wall of the enclosure and the attachment teeth attached to lips 61, 62.

Another accessory, which is particularly useful in the situation where the ducting is used to house loose cables placed on saddles, such as those described with reference to Figures 7, 8, comprises cable holding claws which prevents cables from leaving the enclosure (on account of their weight) when cables are being handled to make local electrical connections, or even during installation, when the ducting is suspended.

Figures 13 and 14 show a preferred embodiment of these cable holding claws 76 in front and side view respectively.

The claws comprises two supporting arms 77, 78 which lie approximately alongside the bottom opening of the ducting enclosure with their extremities adjacent to the edges of the opening, and a rod 79 terminating in a resilient clamp 80, 81 whose ends provided with an attachment tooth 82, 83 form a snap connection with the third recess of the enclosure.

In Figure 13 the holding claw is in fact shown in the attached position, within the enclosure.

Clamp 80, 81 is appropriately shaped with two surfaces to exert a pressure thereon from two fingers and thus assist snap connection or release of the attachment.

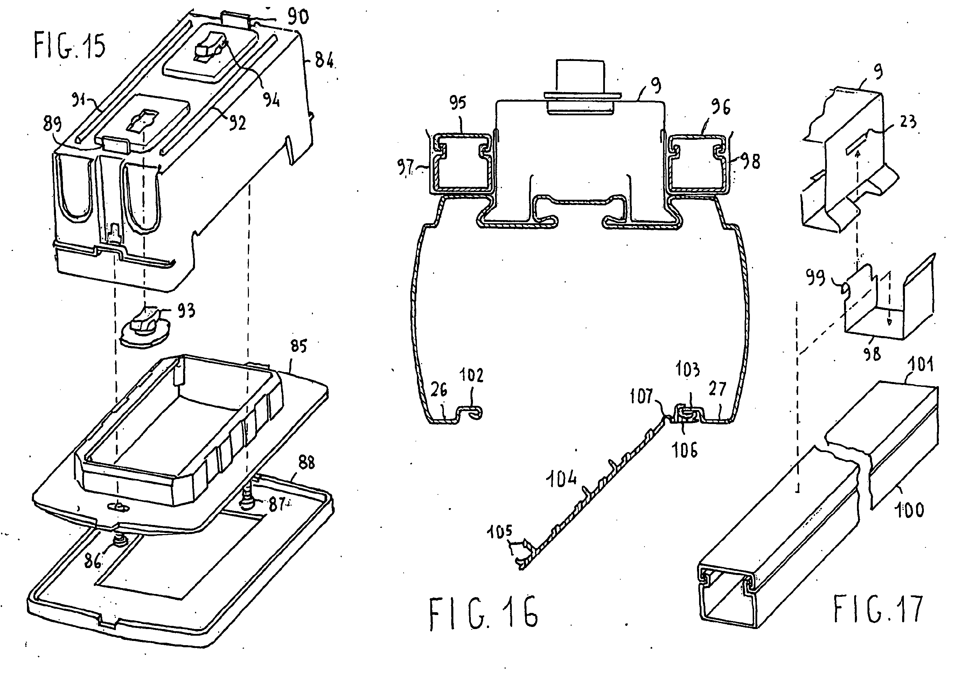

We will now consider the structure of the electrical components for wall enclosure, currently available on the market, with reference to the exploded perspective view in Figure 15.

These comprise a box 84 (normally intended to be cemented in a housing formed in a wall), a supporting frame 85, removably attached to box 84 through two screws 86, 87 and a front cover plate 88 fixed to the frame with a snap connection or two screws, having a predominantly aesthetic function.

Box 84 and frame 85 are of insulating plastics material. Front plate 88 may be of anodised aluminium or plastics, depending upon the design.

One or more electrical components, commonly known as "fruits", with a great variety of functions - electrical socket skirting, switches, commutators, dimmers, buzzers, etc.), which are housed within box 84, are snap connected to supporting frame 85.

The ducting according to this invention makes it possible to fit these components within its enclosure, with marginal easily-producible changes to only box 84.

For this purpose the box is provided on the base wall with alignment and resting posts 89, 90 which are inserted in the third recess of the enclosure, stiffening ribs 91, 92 providing a rest against the top wall of the enclosure, on the inside, and a pair of openings in each of which a cam 93, 94 is inserted for engagement into the third recess in the enclosure.

With these simple modifications to box 84 a large number of commercially available electrical components can be used to great advantage for the ducting's flexibility of use, which is further increased through the possibility of adding a pair of auxiliary raceways, in particular but not exclusively for signal cables, to the main ducting.

The cross-section in Figure 16 and the exploded perspective view in Figure 17 illustrate this aspect.

The top wall of the enclosure provides, on the sides of suspension stirrups 9, two horizontal supporting planes for a pair of auxiliary channels or raceways 95, 96.

The raceways are coupled to the ducting through C-shaped metal saddles 97, 98 which as shown in Figure 17 attach to suspension stirrups 9 through a claw 99 which engages openings 23 provided for the purpose in stirrup 9.

The auxiliary raceways, preferably but not necessarily of the same length as that of enclosure 1, comprise a box member 100 having a C-shaped cross-section closed off by a cover which is snap connected to the box member.

The auxiliary raceways may be fitted together with the ducting enclosure or at a separate time, when there is need, in an extremely easy way.

It is desirable that Figure 16 should be reconsidered in order to complete the description of the ducting.

In general, in suspended ducting too, for safety and aesthetic reasons and to prevent the build-up of dust wherein, it is desirable to provide a continuous easily removable cover for the lower opening of the enclosure.

For this purpose, as illustrated in Figure 16, supporting saddles 26, 27 for the enclosure extend somehow far towards each other to form two lips 102, 103 with the dual function of providing a support for accessory components housed within the enclosure and two attachment ribs for a cover panel 104.

Advantageously the cover panel, of plastics material (or also anodised aluminium) is provided on one edge with an attachment clamp 105 which forms a snap connection with a lip 102 of the enclosure and, on the opposite side, a second attachment clamp 106 which forms a snap connection with the other lip 103.

The clamp attachments to the two lips are independent of each other.

Close to one of the clamps (clamp 106 in Figure 16) the cover member, if made of plastics material, has a cross-section 107 which is made thinner and flexible in such a way that when the ducting is installed suspended, release of clamp 105 allows member 104 to open through the effect of weight and rotate on the thin section, acting as a hinge, without clamp 106 becoming detached from the enclosure.

In the above description terminal mechanical and electrical joints between ducting units, which have a modular length of indicatively 1.5 or 3 metres, have not been considered, and neither have the connection devices to the conductors housed within supporting and guide members 29 such as those shown in Figure 5.

For mechanical connection it is sufficient to provide shaped stirrups which are inserted into the ends of the enclosures and which are secured thereto by screws.

Electrical connections between loose cables can be made if and when necessary using conventional components (screw terminals and the like).

Connection of the conductors housed in supporting and guide members 29 to users or to the power supply network at any point along the ducting can be made using devices such as those described in aforementioned patent EP 0015356.

In particular, in the case of conductors housed in leaktight slots, end or intermediate connection devices may be used such as those described by way of example (in particular with reference to Figures 7, 8 and 10) in European patent application EP1750341.

The innovative aspects present in some electrical connection devices specifically designed for the ducting described constitute the subject matter of separate patent applications.

The above description relates to a preferred embodiment, but it is clear that many variants and additional accessories may be envisaged.

In particular, with regard to the dimensions of the ducting in which there is a space free of cables and conductors and which is open beneath, having a width of indicatively 50 mm and a depth of 50 mm, it is possible to provide for lighting fittings having low heat dissipation, such as fluorescent tubes and corresponding accessories (reflectors, starters and ballasts), within the ducting.

## Claims

1. Suspended electrical ducting system, comprising ducts and supporting stirrups (9) the duct comprising a straight metal enclosure (1), which is open at the bottom, with a top wall (2) and two side walls (3, 4), houses electrical cables and/or members (29) of insulating material for supporting and guiding electrical conductors, said top wall (2) being shaped to form two rectilinear slots (5, 6) opening externally,
**characterised in that**
said slots (5,6) have an internal base of size A, being the inner bottom of said slots, side perpendicular to said inner bottom and an oblique side facing the side walls (3,4) relative to the cross section of the slots,
whereby said slots (5,6) form a pair of recesses into which the two ends (12,13,14,15) of a plurality of supporting stirrups (9) can be reversibly snap fitted, each end forming a wedge or dihedral with a first side (14,15), of size A, which abuts, as a prop, against said inner bottom of said slot and a second surface (12,13) which abuts, as a tooth, against said oblique side of said slot.

2. Suspended electrical ducting system according to claim 1 further comprising a plurality of supporting stirrups (9), made of spring steel plate, each having two ends (12,13,14,15), each bent to form a dihedral with a first side (14,15), of size A, which abuts, as a prop, against said inner bottom of one of said slots (5,6) and a second surface (12,13) which abuts, as a tooth, against the oblique side of said one slot.

3. Suspended electrical ducting system according to claim 1 or 2 in which said top wall (2) forms an attachment shoulder (24, 25) internally at the acute angle of said quadrilateral cross-section, and each of the side walls (3, 4) terminate below in a saddle (26, 27) which is bent inwards to support attachment of one of said supporting members (29) which make a snap connection with the said attachment shoulder (24, 25).

4. Suspended electrical ducting system according to claims 1, 2 or 3 in which said top wall (2) is shaped so as to form a third slot (60), open internally to said enclosure, located between the two slots (5, 6) having a T-shaped cross-section, and provided with lips (61, 62) for the snap or cam attachment of accessories, within the said enclosure and/or to support and screen conductors (63, 64) housed in the wings of the said third slot.

5. Suspended electrical ducting system according to claims 3 or 4 in ,which said saddles (26, 27) each extend into a snap attachment rib (102, 103) for a lower cover panel (104) for said enclosure.

6. Suspended electrical ducting system according to claim 2 or claims 3, 4, 5 when depending on claim 2 comprising, in addition to said enclosure (1) at least one of a pair of auxiliary raceways (95,96) bearing against said top wall (2) and held in position by saddles (97,98) attached to said supporting stirrups (9).

7. Suspended electrical ducting system according to claim 2 or any of claims 3-6, when depending on claim 2, in which the ends (12, 13, 14, 15) of said supporting stirrups (9) each extend as a vertical tongue (16,17) bearing against the vertical walls of said slots (5, 6), projecting therefrom, hence accessible for acting on said tongue and withdrawing it from said slots, whereby disengaging said props and said teeth from said slots and releasing said stirrups.

8. Suspended electrical ducting system according to any of the preceding claims comprising, housed in said enclosure, at least one member (29) of insulating material for supporting and guiding electrical conductors, said member housing said conductors in rectilinear slots individually leaktightly sealed by a sheet (43) of perforatable plastics material.

9. Suspended electrical ducting system according to claim 3 or 4-8, when depending upon claim 3, comprising a plurality of cable supports (52) supported on one of said saddles (26, 27) and snap connected with one of said attachment shoulders (25, 25).

10. Suspended electrical ducting system according to claim 4 or 5-9, when depending upon claim 4, comprising a plurality of cable holding claws (76) snap fitted in said third slot (60).

11. Suspended electrical ducting system according to claim 4 or 5-10, when depending upon claim 4, comprising at least one rail (65) supporting DIN modules, said rail having attachment teeth (73,74) snap fitted in said third slot (60).

12. Suspended electrical ducting system according to claim 4 or 5-11, when depending upon claim 4, comprising at least one electrical component for wall enclosure having a box (84) provided with means (93, 94) for anchoring in said third slot.

13. Suspended electrical ducting system according to claim 5 or 6-12, when depending upon claim 5, comprising a lower cover panel (104), said lower cover panel having, on each of two opposing edges, a clamp (105,106) snap connected to one of said ribs (102,103) of the enclosure, the snap attachment of said clamps being independent of each other, said panel further having a thin and flexible cross-section (107), acting in the manner of a hinge, in the vicinity of one (106) of the said clamps.

## Patentansprüche

1. Hängendes elektrisches Kanalführungssystem, umfassend Kanäle und Haltebügel (9), wobei der Kanal ein gerades, am Boden offenes Metallgehäuse (1) mit einer oberen Wand (2) und zwei Seitenwänden (3, 4) umfaßt, in dem elektrische Kabel und/oder Bauelemente (29) aus Isolationsmaterial zum Halten und Führen elektrischer Leiter untergebracht sind, wobei die obere Wand (2) so geformt ist, daß sie zwei geradlinige, sich nach außen öffnende Schlitze (5, 6) bildet,
**dadurch gekennzeichnet, daß**
die Schlitze (5, 6) eine Innenbohrung mit einer Größe A als Innenboden der Schlitze, eine zu dem Innenboden senkrechte Seite und eine schräg verlaufende Seite besitzen, die in bezug auf den Querschnitt der Schlitze zu den Seitenwänden (3, 4) weist,
wobei die Schlitze (5, 6) zwei Ausnehmungen bilden, in die die zwei Enden (12, 13, 14, 15) mehrerer Haltebügel (9) reversibel eingerastet werden können, wobei jedes Ende einen Keil oder Zweiflächner mit einer ersten Seite (14, 15) mit einer Größe A, die als Strebe gegen den Innenboden des Schlitzes anliegt, und einer zweiten Fläche (12, 13) bildet, die als Zahn gegen die schräg verlaufende Seite des Schlitzes anliegt.

2. Hängendes elektrisches Kanalführungssystem nach Anspruch 1, umfassend mehrere Haltebügel (9) aus Federstahlblech mit jeweils zwei Enden (12, 13, 14, 15), die jeweils zur Form eines Zweiflächners mit einer ersten Seite (14, 15) mit einer Größe A gebogen sind, die als Strebe gegen den Innenboden von einem der Schlitze (5, 6) anliegt, und einer zweiten Fläche (12, 13), die als Zahn gegen die schräg verlaufende Seite des Schlitzes anliegt.

3. Hängendes elektrisches Kanalführungssystem nach Anspruch 1 oder 2, wobei die obere Wand (2) im Inneren eine Befestigungsschulter (24, 25) in dem spitzen Winkel des vierseitigen Querschnitts bildet und jede von den Seitenwänden (3, 4) unten in einem Sattel (26, 27) endet, der nach innen gebogen ist, um die Befestigung von einem der Halteglieder (29) abzustützen, die eine Einrastverbindung mit der Befestigungsschulter (24, 25) eingehen.

4. Hängendes elektrisches Kanalführungssystem nach Anspruch 1, 2 oder 3, bei dem die obere Wand (2) zur Ausbildung eines dritten Schlitzes (60) gestaltet ist, der im Inneren des Gehäuses offen ist, zwischen den zwei Schlitzen (5, 6) mit einem T-förmigen Querschnitt liegt und mit Lippen (61, 62) zum einrastenden oder eingreifenden Befestigen von Zubehörteilen in dem Gehäuse und/oder zum Halten und Abschirmen von in den Flügeln des dritten Schlitzes untergebrachten Leitern (63, 64) versehen ist.

5. Hängendes elektrisches Kanalführungssystem nach Anspruch 3 oder 4, wobei die Sättel (26, 27) jeweils in eine einrastende Befestigungsrippe (102, 103) für eine untere Abdeckplatte (104) für das Gehäuse vorstehen.

6. Hängendes elektrisches Kanalführungssystem nach Anspruch 2 oder den Ansprüchen 3, 4, 5, wenn diese von Anspruch 2 abhängig sind, zusätzlich zu dem Gehäuse (1) mindestens zwei Hilfslaufbahnen (95, 96) umfassend, die gegen die obere Wand (2) anliegen und von an den Haltebügeln (9) befestigten Sätteln (97, 98) in Position gehalten werden.

7. Hängendes elektrisches Kanalführungssystem nach Anspruch 2 oder einem der Ansprüche 3 - 6, wenn diese von Anspruch 2 abhängig sind, wobei sich die Enden (12, 13, 14, 15) der Haltebügel (9) jeweils als eine vertikale Zunge (16, 17) erstrecken, die gegen die vertikalen Wände der Schlitze (5, 6) anliegt und von diesen vorsteht, und daher zum Einwirken auf die Zunge und zu deren Herausziehen aus den Schlitzen zugänglich sind, wodurch die Streben und die Zähne außer Eingriff der Schlitze gebracht und die Bügel freigegeben werden.

8. Hängendes elektrisches Kanalführungssystem nach einem der vorhergehenden Ansprüche, umfassend in dem Gehäuse untergebracht mindestens ein Bauelement (29) aus Isolationsmaterial zum Halten und Führen elektrischer Leiter, wobei in dem Bauelement die Leiter in geradlinigen Schlitzen untergebracht sind, die einzeln durch eine Folie (43) aus perforierbarem Kunststoff lecksicher abgedichtet sind.

9. Hängendes elektrisches Kanalführungssystem nach Anspruch 3 oder den Ansprüchen 4 - 8, wenn diese von Anspruch 3 abhängig sind, umfassend mehrere Kabelhalterungen (52), die an einem der Sättel (26, 27) getragen werden und mit einer der Befestigungsschultern (24, 25) in Einschnappverbindung stehen.

10. Hängendes elektrisches Kanalführungssystem nach Anspruch 4 oder den Ansprüchen 5 - 9, wenn diese von Anspruch 4 abhängig sind, umfassend mehrere Kabelhalteklauen (76), die in den dritten Schlitz (60) eingerastet sind.

11. Hängendes elektrisches Kanalführungssystem nach Anspruch 4 oder den Ansprüchen 5-10, wenn diese von Anspruch 4 abhängig sind, umfassend mindestens eine Schiene (65) zum Tragen von DIN-Modulen, wobei die Schiene Befestigungszähne (73, 74) umfaßt, die in den dritten Schlitz (60) eingerastet sind.

12. Hängendes elektrisches Kanalführungssystem nach Anspruch 4 oder den Ansprüchen 5-11, wenn diese von Anspruch 4 abhängig sind, umfassend mindestens ein elektrisches Teil für ein Wandgehäuse mit einem Kasten (84), der mit Mitteln (93, 94) zum Verankern in dem dritten Schlitz versehen ist.

13. Hängendes elektrisches Kanalführungssystem nach Anspruch 5 oder den Ansprüchen 6 - 12, wenn diese von Anspruch 5 abhängig sind, umfassend eine untere Abdeckplatte (104), wobei die untere Abdeckplatte an jedem der zwei einander gegenüberliegenden Ränder eine Klammer (105, 106) aufweist, die mit einer der Rippen (102, 103) des Gehäuses in Einschnappverbindung steht, wobei die Einschnappbefestigung der Klammern unabhängig voneinander ist und die Platte außerdem einen dünnen und flexiblen, in der Art eines Gelenks wirkenden Querschnitt (107) in der Nähe von einer (106) der Klammern aufweist.

## Revendications

1. Système suspendu de canalisation électrique, comprenant des canaux et des étriers de support (9), le canal comprenant un boîtier métallique droit (1) à fond ouvert qui présente une paroi supérieure (2) et deux parois latérales (3, 4) et dans lequel sont logés des câbles électriques et/ou des éléments (29) en matériau isolant pour supporter et guider des conducteurs électriques, la paroi supérieure (2) étant configurée de manière à former deux fentes rectilignes (5, 6) s'ouvrant vers l'extérieur,
**caractérisé par le fait que**
lesdites fentes (5, 6) présentent un trou intérieur d'une taille A en tant que fond intérieur des fentes, une face perpendiculaire au fond intérieur et une face oblique qui, par rapport à la section transversale des fentes, montre vers lesdites parois latérales (3, 4),
lesdites fentes (5, 6) formant deux évidements dans lesquels les deux extrémités (12, 13, 14, 15) de plusieurs étriers de support (9) peuvent être enclenchées de manière réversible, chacune des extrémités formant un coin ou un dièdre ayant une première face (14, 15) de taille A qui s'appuie, comme étai, contre le fond intérieur de la fente, et une deuxième face (12, 13) qui s'appuie, en tant que dent, contre la face oblique de la fente.

2. Système suspendu de canalisation électrique selon la revendication 1, comprenant une pluralité d'étriers de support (9) en tôle d'acier à ressorts, ayant chacun deux extrémités (12, 13, 14, 15) recourbées chacune de manière à former un dièdre avec une première face (14, 15) de taille A qui s'appuie, comme étai, contre le fond intérieur de l'une des fentes, et une deuxième face (12, 13) qui s'appuie, en tant que dent, contre la face oblique de la fente.

3. Système suspendu de canalisation électrique selon la revendication 1 ou 2, dans lequel ladite paroi supérieure (2) forme intérieurement un épaulement d'attache (24, 25) à l'angle aigu de la section transversale quadrilatérale, et chacune des parois latérales (3, 4) se termine en bas en une selle (26, 27) qui est recourbée vers l'intérieur de manière à supporter la fixation de l'un des éléments de support (29) venant s'encliqueter avec ledit épaulement d'attache (24, 25).

4. Système suspendu de canalisation électrique selon la revendication 1, 2 ou 3, dans lequel ladite paroi supérieure (2) est configurée de manière à former une troisième fente (60) ouverte à l'intérieur du boîtier, située entre les deux fentes (5, 6) avec une section transversale en T et pourvue de lèvres (61, 62) pour une fixation à encliquetage ou engagement d'accessoires dans ledit boîtier et/ou pour supporter et abriter des conducteurs (63, 64) logés dans les ailes de ladite troisième fente.

5. Système suspendu de canalisation électrique selon la revendication 3 ou 4, dans lequel lesdites selles (26, 27) s'étendent chacune dans une nervure de fixation à encliquetage (102, 103) pour un panneau inférieur de recouvrement (104) pour le boîtier.

6. Système suspendu de canalisation électrique selon la revendication 2 ou les revendications 3, 4, 5 lorsqu'elles dépendent de la revendication 2, comprenant en plus du boîtier (1) au moins deux canalisations auxiliaires (95, 96) qui s'appuient contre la paroi supérieure (2) et sont maintenues en position par des selles (97, 98) fixées sur lesdits étriers de support (9).

7. Système suspendu de canalisation électrique selon la revendication 2 ou selon l'une quelconque des revendications 3 à 6 lorsqu'elles dépendent de la revendication 2, dans lequel les extrémités (12, 13, 14, 15) des étriers de support (9) s'étendent chacune comme une languette verticale (16, 17) s'appuyant contre les parois verticales des fentes (5, 6) tout en faisant saillie de celles-ci, et sont donc accessibles pour agir sur ladite languette et pour la retirer hors des fentes, les étais et les dents étant ainsi désengagés des fentes et les étriers étant ainsi libérés.

8. Système suspendu de canalisation électrique selon l'une des revendications précédentes, comprenant, logé à l'intérieur dudit boîtier, au moins un élément (29) en matériau isolant pour supporter et guider des conducteurs électriques, ledit élément logeant les conducteurs dans des fentes rectilignes étanchées individuellement par une feuille (43) en matière plastique apte à être perforée.

9. Système suspendu de canalisation électrique selon la revendication 3 ou les revendications 4 à 8, lorsque celles-ci dépendent de la revendication 3, comprenant une pluralité de supports de câble (52) supportés sur l'une des selles (26, 27) et en encliquetage avec l'un desdits épaulements d'attache (24, 25).

10. Système suspendu de canalisation électrique selon la revendication 4 ou les revendications 5 à 9 lorsque celles-ci dépendent de la revendication 4, comprenant une pluralité de griffes de support de câble (76) encliquetées dans ladite troisième fente (60).

11. Système suspendu de canalisation électrique selon la revendication 4 ou les revendications 5 à 10 lorsque celles-ci dépendent de la revendication 4, comprenant au moins un rail (65) de support de modules DIN, ledit rail comprenant des dents de fixation (73, 74) encliquetées dans ladite troisième fente (60).

12. Système suspendu de canalisation électrique selon la revendication 4 ou les revendications 5 à 11 lorsque celles-ci dépendent de la revendication 4, comprenant au moins un composant électrique pour un boîtier mural ayant une caisse (84) pourvue de moyens (93, 94) d'ancrage dans ladite troisième fente (60).

13. Système suspendu de canalisation électrique selon la revendication 5 ou les revendications 6 à 12 lorsque celles-ci dépendent des la revendication 5, comprenant un panneau inférieur de recouvrement (104), ledit panneau inférieur de recouvrement présentant, sur chacun des deux bords opposés, une agrafe (105, 106) venant s'enclencher avec l'une des nervures (102, 103) du boîtier, la fixation à enclenchement desdites agrafes étant indépendante l'une de l'autre et ledit panneau ayant en outre, à proximité de l'une desdites agrafes (106), une section transversale mince et flexible (107) agissant à la manière d'une articulation.
